# EUROPEAN PATENT SPECIFICATION

(11) **EP 1 792 357 B1**
(45) Date of publication and mention of the grant of the patent: **15.10.2008**
(21) Application number: 05786417.5
(22) Date of filing: 22.08.2005
(51) Int. Cl.: H01M 6/16

(54) **LOW TEMPERATURE Li/FeS<sb>2</sb> BATTERY**
NIEDERTEMPERATUR-LI/FES2-BATTERIE
BATTERIE BASSE TEMPERATURE CONTENANT DU LI/FES<SB>2</SB>

(30) Priority: 27.08.2004 US 928943; 16.09.2004 US 943169
(43) Date of publication of application: 06.06.2007
(73) Proprietor: EVEREADY BATTERY COMPANY, INC., St. Louis, MO 63141 (US)
(72) Inventor: WEBBER, Andrew, Avon Lake, OH 44012 (US)
(74) Representative: Weber, Thomas
(86) International application number: PCT/US2005/029803
(87) International publication number: WO 2006/026233

(56) References cited:
- EP-A- 0 529 802
- EP-A- 1 439 591
- US-A- 4 450 214
- US-A- 5 432 030
- US-A- 5 514 491

## Description

### BACKGROUND

This invention relates to a primary nonaqueous electrolyte electrochemical battery cell, such as a lithium/iron disulfide cell, with good low temperature performance characteristics.

Batteries are used to provide power to many portable electronic devices. Common advantages of lithium batteries (those that contain metallic lithium or lithium alloy as the electrochemically active material of the negative electrode) include high energy density, good high rate and high power discharge performance, good performance over a broad temperature range, long shelf life and light weight. Lithium batteries are becoming increasingly popular as the battery of choice for new devices because of trends in those devices toward smaller size and higher power. The ability to use high power consumer devices in low temperature environments is also important. While lithium batteries can typically operate devices at lower temperatures than batteries with aqueous electrolytes, electrolyte systems that provide the best high power discharge characteristics, even after storage for long periods of time, do not always give the best performance at low temperatures.

One type of lithium battery, referred to below as a Li/FeS₂ battery, has iron disulfide as the electrochemically active material of the positive electrode. Li/FeS₂ batteries have used electrolyte systems with a wide variety of solutes and organic solvents. The salt/solvent combination is selected to provide sufficient electrolytic and electrical conductivity to meet the cell discharge requirements over the desired temperature range. While the electrical conductivity is relatively low compared to some other common solvents, ethers are often desirable because of their generally low viscosity, good wetting capability, good low temperature discharge performance and good high rate discharge performance. This is particularly true in Li/FeS₂ cells because the ethers are more stable than with MnO₂ cathodes, so higher ether levels can be used. Among the ethers that have been used are 1,2-dimethoxyethane (DME) and 1,3-dioxolane (DIOX), which have been used together and in blends with other cosolvents. However, because of interactions among solvents, as well as with electrolyte solutes and electrodes, cell performance has been difficult to predict based on the properties of individual solvent and solute components.

A wide variety of solutes has been used in Li/FeS₂ cell electrolytes; lithium trifluoromethanesulfonate (also commonly referred to as lithium triflate or LiCF₃SO₃) is among them. An example of a Li/FeS₂ cell with a lithium triflate solute in a solvent blend comprising DIOX and DME is found in U.S. Patent No. 4,952,33. A solvent blend of 40 to 53 volume percent cyclic ether (e.g., DIOX), 32 to 40 volume percent linear aliphatic ether (e.g., DME) and 8 to 18 volume percent alkylene carbonate (e.g., propylene carbonate) is disclosed. However, such an electrolyte can result in poor cell discharge performance at high discharge rates.

Another example of a cell with an electrolyte containing lithium triflate dissolved in a solvent comprising DIOX and DME is found in U.S. Patent No. 5,290,414. A blend of from 1:99 to 45:55 DIOX:DME with an optional cosolvent (e.g., 0.2 weight percent 3,5-dimethylisoxazole (DMI)) is disclosed as a solvent. The disclosed cell had low impedance following storage at high temperature.

Another solvent that has been used in nonaqueous electrolytes, especially for use in Li/FeS₂ cells, is 3-methyl-2-oxazolidinone (3Me2Ox), which is often used as a cosolvent along with other solvent components. For example, U.S. Patent No. 4,450,214 discloses a Li/FeS₂ cell with an electrolyte that includes lithium triflate as the primary salt and a 40 / 30 / 30 / 0.2 by volume blend of DIOX, DME, 3Me2Ox and DMI. However, higher DME levels can be advantageous.

While electrolytes containing lithium triflate can provide fair cell electrical and discharge characteristics, such electrolytes have relatively low electrical conductivity, and lithium triflate is relatively expensive. Lithium iodide (LiI) has been used as an alternative to lithium triflate to both reduce cost and improve cell electrical performance. U.S. Patent No. 5,514,491, discloses a cell with improved high rate discharge performance, even after storage at high temperature. LiI is the sole solute, and the electrolyte solvent comprises at least 97 volume percent ether (e.g., 20:80 to 30:70 by volume DIOX:DME, with 0.2 volume percent DMI as a cosolvent).

However, it has been discovered that when LiI is used as the solute in an electrolyte containing DME in the solvent, especially more than 40 volume percent, discharge capacity at low temperatures, such as -20°C and below, can be very low. This is believed to be due to formation of a DME solvate that can precipitate from the electrolyte solution at low temperatures or otherwise degrade low temperature cell performance. Simply reducing the DME content in the solvent can prevent this problem, but some of the improvement in high rate and high power discharge performance realized with LiI as the solute is sacrificed.

In view of the above, an object of the present invention is to provide a nonaqueous battery cell, particularly a Li/FeS₂ cell, which is economical to produce and has good discharge characteristics at room temperature, particularly on high rate and high power discharge, while also providing useful capacity at low temperatures.

### SUMMARY

The above objects are met and the above disadvantages of the prior art are overcome by using an electrolyte having LiI as a primary solute and a solvent with a high level of 1,2-dimethoxyethane as well as a limited amount of 3-methyl-2-oxazolidinone.

Accordingly, one aspect of the present invention is directed to a primary electrochemical battery cell having a negative electrode comprising an alkali metal, a positive electrode, a separator disposed between the negative and positive electrodes, and an electrolyte. The electrolyte includes a solute comprising greater than 50 weight percent lithium iodide and a solvent blend with 45 to 80 volume percent 1,2-dimethoxyethane and 5 to 25 volume percent 3-methyl-2-oxazolidinone.

A second aspect of the present invention is directed to the above electrochemical battery cell having a negative electrode, a positive electrode, a separator disposed between the negative and positive electrodes, and an electrolyte. The cell is a primary cell, the negative electrode contains a lithium metal, the positive electrode contains at least one of FeS and FeS₂, the electrolyte comprises a solute comprising greater than 50 weight percent lithium iodide and a solvent comprising from more than 50 to 80 volume percent 1,2-dimethoxyethane and 5 to 20 volume percent 3-methyl-2-oxazolidinone, and the concentration of solute is 0.5 to 2 moles per liter of solvent.

A third aspect of the invention is directed to an electrolyte for use in a primary lithium battery cell. The electrolyte comprises 0.5 to 2 moles of solute per liter of a solvent, the solute comprises greater than 50 weight percent lithium iodide, and the solvent comprises 45 to 80 volume percent 1,2-dimethoxyethane and 5 to 25 volume percent 3-methyl-2-oxazolidinone.

These and other features, advantages and objects of the present invention will be further understood and appreciated by those skilled in the art by reference to the following specification, claims and appended drawings.

Unless otherwise specified herein, all disclosed characteristics and ranges are as determined at room temperature (20-25°C).

As used herein:
1. primary solute means the solute component that makes up more than 50 weight percent of the total amount of solute in an electrolyte; and
2. volumes of solvent components refer to the volumes of cosolvents that are mixed together to make the solvent for an electrolyte; volume ratios of cosolvents can be determined from the weight ratios of the cosolvents by dividing the relative weights of each of the cosolvents by their respective densities at 20°C (e.g., 0.867 g/cm³ for DME, 1.176 g/cm³ for 3Me2Ox, 1.065 g/cm³ for DIOX and 0.984 g/cm³ for DMI).

### BRIEF DESCRIPTION OF THE DRAWINGS

In the drawings:

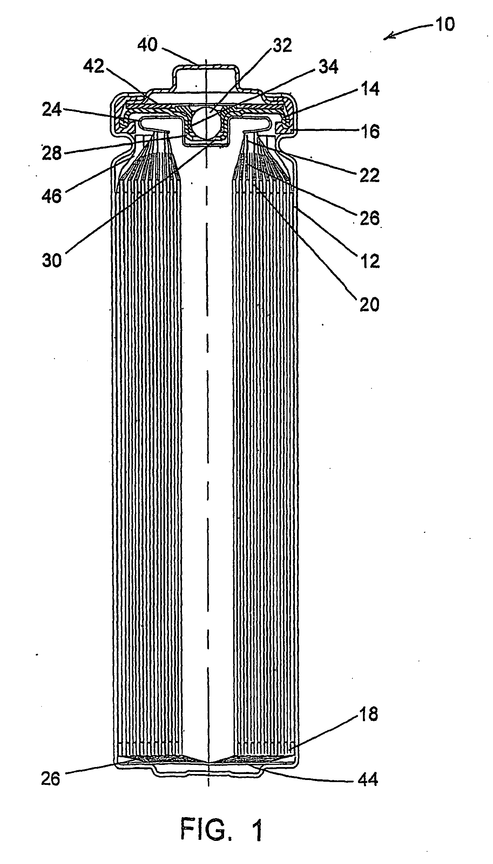

Fig. 1 is an embodiment of a cylindrical cell with a lithium negative electrode, an iron disulfide positive electrode and a nonaqueous organic electrolyte.

### DESCRIPTION

The invention will be better understood with reference to Fig. 1, which shows an FR6 type cylindrical battery cell having a housing sealed by two thermoplastic seal members (a gasket and a vent bushing). Cell 10 has a housing that includes a can 12 with a closed bottom and an open top end that is closed with a cell cover 14 and a gasket 16. The can 12 has a bead or reduced diameter step near the top end to support the gasket 16 and cover 14. The gasket 16 is compressed between the can 12 and the cover 14 to seal a negative electrode (anode) 18, a positive electrode (cathode) 20 and electrolyte within the cell 10. The anode 18, cathode 20 and a separator 26 are spirally wound together into an electrode assembly. The cathode 20 has a metal current collector 22, which extends from the top end of the electrode assembly and is connected to the inner surface of the cover 14 with a contact spring 24. The anode 18 is electrically connected to the inner surface of the can 12 by a metal tab (not shown). An insulating cone 46 is located around the peripheral portion of the top of the electrode assembly to prevent the cathode current collector 22 from making contact with the can 12, and contact between the bottom edge of the cathode 20 and the bottom of the can 12 is prevented by the inward-folded extension of the separator 26 and an electrically insulating bottom disc 44 positioned in the bottom of the can 12. Cell 10 has a separate positive terminal cover 40, which is held in place by the inwardly crimped top edge of the can 12 and the gasket 16. The can 12 serves as the negative contact terminal. Disposed between the peripheral flange of the terminal cover 40 and the cell cover 14 is a positive temperature coefficient (PTC) device 42 that substantially limits the flow of current under abusive electrical conditions. Cell 10 also includes a pressure relief vent. The cell cover 14 has an aperture comprising an inward projecting central vent well 28 with a vent hole 30 in the bottom of the well 28. The aperture is sealed by a vent ball 32 and a thin-walled thermoplastic bushing 34, which is compressed between the vertical wall of the vent well 28 and the periphery of the vent ball 32. When the cell internal pressure exceeds a predetermined level, the vent ball 32, or both the ball 32 and bushing 34, are forced out of the aperture to release pressurized fluids from the cell 10.

Electrolytes for cells according to the invention are nonaqueous electrolytes. In other words, they contain water only in very small quantities (preferably no more than about 500 parts per million by weight) as a contaminant. The electrolyte comprises a solute dissolved in an organic solvent. The solute comprises LiI as the primary solute but can include one or more additional soluble salts, such as LiCF₃SO₃, LiClO₄, Li(CF₃SO₂)₂N, Li(CF₃CF₂SO₂)₂N, Li(CF₃SO₂)₃C and lithium bis(oxalato)borate. Preferably the total amount of solute in the electrolyte is 0.5 to 2 moles per liter of solvent. In some embodiments LiI is the sole solute.

The solvent comprises 45 to 80 volume percent (preferably at least 50 volume percent) DME and 5 to 25 volume percent (preferably no more than 20 volume percent) 3Me2Ox. If the solvent contains too little DME, electrical performance at room temperature can suffer, and if it contains too much DME, electrical performance at low temperature can suffer. It has been discovered that including about 5 to 25 percent 3Me2Ox in the solvent can improve low temperature electrical performance in cells with electrolytes containing LiI as the primary solute and 45 to 80 volume percent DME. It is believed that the 3Me2Ox prevents the formation of detrimental soluble and insoluble DME solvates of the LiI. If the solvent contains too little 3Me2Ox, the desired effects may not be achieved, and if the solvent contains too much 3Me2Ox, the amount of DME will be less than desired.

The solvent can also include additional cosolvents, examples of which include ethylene carbonate, propylene carbonate, 1,2-butylene carbonate, 2,3-butylene carbonate, vinylene carbonate, methyl formate, γ-butyrolactone, sulfolane, acetonitrile, 3,5-dimethylisoxazole, N,N-dimethyl formamide, N,N -dimethylacetamide, N,N - dimethylpropyleneurea, 1,1,3,3-tetramethylurea, and other ethers such as 1,2-diethoxyethane, diglyme, triglyme, tetraglyme, methyltetrahydrofurfuryl ether, diethyl ether, tetrahydrofuran, 2-methyl tetrahydrofuran, 2-methoxytetrahydrofuran, 2,5-dimethoxytetrahydrofuran, 1,2-dimethoxypropane based compounds (1,2-dimethoxypropane and substituted 1,2-dimethoxypropane) and 1,3-dioxolane based compounds (1,3-dioxolane and substituted 1,3-dioxolane).

DIOX based compounds, particularly 1,3-dioxolane, and DMI are preferred cosolvents. Examples of substituted DIOX include alkyl- and alkoxy-substituted DIOX, such as 2-methyl-1,3-dioxolane and 4-methyl-1,3-dioxolane. When the solvent includes a DIOX based cosolvent, the solvent preferably comprises no more than 45 volume percent DIOX. Preferably the ratio of DME to DIOX based cosolvent is preferably at least 1 to 1, more preferably at least 2 to 1 and most preferably about 3 to 1.

Because they can form precipitates with LiI, the solvent preferably contains a total of less than 5 volume percent, and more preferably no, dialkyl and cyclic carbonates

The anode contains an alkali metal, such as a lithium, sodium or potassium metal, often in the form of a sheet or foil. The composition of the alkali metal can vary, though the purity is always high. The alkali metal can be alloyed with other metals, such as aluminum, to provide the desired cell electrical performance. A preferred alkali metal is a lithium metal, more preferably alloyed with aluminum, most preferable with about 0.5 weight percent aluminum. When the anode is a solid piece of lithium, a separate current collector within the anode is not required, since the lithium metal has a very high electrical conductivity. However, when a separate current collector is used, the current collector can be made from a copper or copper alloy metal.

The cathode contains one or more active materials. Preferably the active materials, when coupled with the anode in the cell, result in a nominal cell open circuit voltage of 1.5 volts. Preferred active cathode materials include iron sulfides (e.g., FeS and FeS₂), more preferably iron disulfide (FeS₂), usually in particulate form. Examples of other active materials include oxides of bismuth, such as Bi₂O₃, as well as CuO, Cu₂O, CuS and C_{U2}S. In addition to the active material, the cathode generally contains one or more electrically conductive materials such as metal or carbon (e.g., graphite, carbon black and acetylene black). A binder may be used to hold the particulate materials together, especially for cells larger than button size. Small amounts of various additives may also be included to enhance processing and cell performance. The particulate cathode materials can be formed into the desired electrode shape and inserted into the cell, or they can be applied to a current collector. For example, a coating can be applied to a thin metal foil strip for use in a spirally wound electrode assembly, as shown in Fig. 1. Aluminum is a commonly used material for the cathode current collector.

Any suitable separator material may be used. Suitable separator materials are ion-permeable and electrically nonconductive. They are generally capable of holding at least some electrolyte within the pores of the separator. Suitable separator materials are also strong enough to withstand cell manufacturing and pressure that may be exerted on them during cell discharge without tears, splits, holes or other gaps developing. Examples of suitable separators include microporous membranes made from materials such as polypropylene, polyethylene and ultrahigh molecular weight polyethylene. Preferred separator materials for Li/FeS₂ cells include CELGARD® 2400 and 2500 microporous polypropylene membranes (from Celgard Inc., Charlotte, NC, USA) and Tonen Chemical Corp.'s Setella F20DHI microporous polyethylene membrane (available from ExxonMobile Chemical Co, Macedonia, NY, USA). A layer of a solid electrolyte, a polymer electrolyte or a gel-polymer electrolyte can also be used as a separator.

Specific anode, cathode and electrolyte compositions and amounts can be adjusted and the separator selected to provide the desired cell manufacturing, performance and storage characteristics. U.S. Patent Publication No. US 2003/0228518 A1, published on December 11,2003, discloses a Li/FeS₂ cell with high energy density and discharge efficiency. Electrolyte according to the present invention can be used advantageously in such a cell.

The cell container is often a metal can with an integral closed bottom, though a metal tube that is initially open at both ends may also be used instead of a can. The can is generally steel, plated with nickel on at least the outside to protect the outside of the can from corrosion. The type of plating can be varied to provide varying degrees of corrosion resistance or to provide the desired appearance. The type of steel will depend in part on the manner in which the container is formed. For drawn cans the steel can be a diffusion annealed, low carbon, aluminum killed, SAE 1006 or equivalent steel, with a grain size of ASTM 9 to 11 and equiaxed to slightly elongated grain shape. Other steels, such as stainless steels, can be used to meet special needs. For example, when the can is in electrical contact with the cathode, a stainless steel may be used for improved resistance to corrosion by the cathode and electrolyte.

The cell cover is typically metal. Nickel plated steel may be used, but a stainless steel is often desirable, especially when the cover is in electrical contact with the cathode. The complexity of the cover shape will also be a factor in material selection. The cell cover may have a simple shape, such as a thick, flat disk, or it may have a more complex shape, such as the cover shown in Fig. 1. When the cover has a complex shape like that in Fig. 1, a type 304 soft annealed stainless steel with ASTM 8-9 grain size may be used, to provide the desired corrosion resistance and ease of metal forming. Formed covers may also be plated, with nickel for example.

The terminal cover should have good resistance to corrosion by water in the ambient environment, good electrical conductivity and, when visible on consumer batteries, an attractive appearance. Terminal covers are often made from nickel plated cold rolled steel or steel that is nickel plated after the covers are formed. Where terminals are located over pressure relief vents, the terminal covers generally have one or more holes to facilitate cell venting.

The gasket comprises a thermoplastic material that is resistant to cold flow at high temperatures (e.g., 75°C and above), chemically stable (resistant to degradation, e.g., by dissolving or cracking) when exposed to the internal environment of the cell and resistant to the transmission of air gases into and electrolyte vapors from the cell. Gaskets can be made from thermoplastic resins. For a cell with an electrolyte having a high ether content, preferred resins comprise polypropylene, polyphthalamide and polyphenylene sulfide. Examples include PRO-FAX® 6524 grade polypropylene from Basell Polyolefins, Wilmington, DE, USA; RTP 4000 grade polyphthalamide from RTP Company, Winona, MN, USA; AMODEL® ET 1001 L (polyphthalamide with 5-40 weight percent impact modifier) from Solvay Advanced Polymers, LLC, Alpharetta, GA, USA; and FORTRON® SKX 382 (polyphenylene sulfide with about 15 weight percent impact modifier) from Ticona-US, Summit, NJ, USA.

To improve the seal at the interfaces between the gasket and the cell container and the cell cover, the gasket can be coated with a suitable sealant material. A polymeric material such as ethylene propylene diene terpolymer (EPDM) can be used in embodiments with an organic electrolyte solvent.

The vent bushing is a thermoplastic material that is resistant to cold flow at high temperatures (e.g., 75°C and above). The resin can be formulated to provide the desired sealing, venting and processing characteristics. For example, the base resin can be modified by adding a thermal-stabilizing filler to provide a vent bushing with the desired sealing and venting characteristics at high temperatures. Suitable polymeric base resins include ethylene-tetrafluoroethylene, polyphenylene sulfide, polyphthalamide, ethylene-chlorotrifluoroethylene, chlorotrifluoroethylene, perfluoroalkoxyalkane, fluorinated perfluoroethylene polypropylene and polyetherether ketone. Ethylene-tetrafluoroethylene copolymer (ETFE), polyphenylene sulfide (PPS) and polyphthalamide (PPA) are preferred. Fillers may be inorganic materials, such as glass, clay, feldspar, graphite, mica, silica, talc and vermiculite, or they may be organic materials such as carbons. An example of a suitable thermoplastic resin is TEFZEL® HT2004 (ETFE resin with 25 weight percent chopped glass filler) from E.I. du Pont de Nemours and Company, Wilmington, DE, USA.

It is generally preferred that the wall of the vent bushing between the vent ball and the vent well in the cover be thin (e.g., 0.006 to 0.015 inch as manufactured) and be compressed by about 25 to 40 percent when the bushing and ball are inserted into the cover.

The vent ball can be made from any suitable material that is stable in contact with the cell contents and provides the desired cell sealing and venting characteristic. Glasses or metals, such as stainless steel, can be used. The vent ball should be highly spherical and have a smooth surface finish with no imperfections, such as gouges, scratches or holes visible under 10 times magnification. The desired sphericity and surface finish depend in part on the ball diameter. For example, in one embodiment of a Li/FeS₂ cell, for balls about 0.090 inch (2.286 mm) in diameter the preferred maximum sphericity is 0.0001 inch (0.00254 mm) and the preferred surface finish is 3 microinches (0.0762 µm) RMS maximum. For balls about 0.063 inch (1.600 mm) in diameter, the preferred maximum sphericity is 0.000025 inch (0.000635 mm), and the preferred maximum surface finish is 2 microinches (0.0508 µm) RMS.

The cell can be closed and sealed using any suitable process. Such processes may include, but are not limited to, crimping, redrawing, colleting, gluing and combinations thereof. For example, for the cell in Fig. 1, a bead is formed in the can after the electrodes and insulator cone are inserted, and the gasket and cover assembly (including the cell cover, contact spring and vent bushing) are placed in the open end of the can. The cell is supported at the bead while the gasket and cover assembly are pushed downward against the bead. The diameter of the top of the can above the bead is reduced with a segmented collet to hold the gasket and cover assembly in place in the cell. After electrolyte is dispensed into the cell through the apertures in the vent bushing and cover, a vent ball is inserted into the bushing to seal the aperture in the cell cover. A PTC device and a terminal cover are placed onto the cell over the cell cover, and the top edge of the can is bent inward with a crimping die to retain the gasket, cover assembly, PTC device and terminal cover and complete the sealing of the open end of the can by the gasket.

Following assembly the cell can be predischarged, such as by discharging the cell by a small amount (e.g., removing a total of about 180 mAh of the cell capacity of an FR6 type cell) in one or more pulses.

The above description is particularly relevant to FR6 type cylindrical Li/FeS₂ cells with nonaqueous electrolytes and to pressure relief vents comprising a thermoplastic bushing and vent ball. However, the invention may also be adapted to other sizes and types of cells, such as button cells, non-cylindrical (e.g., prismatic) cells and cells with other pressure relief vent designs. Cells according to the invention can have spiral wound electrode assemblies, such as that shown in Fig. 1, or another electrode configuration, such as folded strips, stacked flat plates, bobbins and the like.

The invention and its features and advantages are further illustrated in the following examples.

### Example 1

Comparative FR6 type Li/FeS₂ cells were made similar to cell 10 in Fig. 1 and the description thereof above. Each cell had an anode made from about 0.97 grams of lithium metal, alloyed with 0.5 weight percent aluminum. Each cell had a cathode with total of about 5.0 grams of a mixture, coated on both sides of a strip of aluminum foil. The coating contained about 92 weight percent FeS₂, 1.4 weight percent acetylene black, 4 weight percent graphite, 2 weight percent SEBS binder, 0.3 weight percent micronized PTFE and 0.3 weight percent fumed silica. A 25 µm thick polypropylene separator was used. Each cell was filled with about 1.6 grams of electrolyte, which contained about 1 mole of LiCF₃SO₃ per liter of solvent, and the solvent was a solvent blend containing a DIOX / DME / DMI volume ratio of 25 / 75 / 0.2. The cells were assembled as described above and then predischarged. These are designated Lot A in the table below.

### Example 2

Comparative FR6 cells were made in the same manner as those in Lot A (Example 1) except for the electrolyte composition, which contained 0.75 moles per liter of LiI instead of LiCF₃SO₃. These cells are designated Lot B in the table below.

### Example 3

Cells from Lots A and B were discharged on a intermittent discharge test (continuous cycles of 2 minutes at 1000 mA and 5 minutes open circuit to 1.0 volt), some at room temperature, some at 0°C and some at -20°C. The results are summarized in the table below, which shows average discharge capacity as a percentage of the average discharge capacity of Lot A at room temperature.

Substituting LiI for LiCF₃SO₃ in the electrolyte resulted in a 12 percent increase: in capacity at room temperature, but at 0°C the capacity of Lot B was only 8 percent of Lot A at room temperature, substantially lower than the capacity of Lot A at 0°C. At -20°C, cells from Lot B provided almost no useful capacity.

### Example 4

FR6 cells according to the invention were made in the same manner as those in Lot A (Example 1) except for the electrolyte composition. The electrolyte consisted of 0.75 moles of LiI per liter of solvent, and the solvent consisted of DIOX, DME, DMI and 3Me2Ox in a volume ratio of 25 / 75 / 0.2 / 10 (about 9 volume percent 3Me2Ox). These cells are designated Lot C in the table below.

### Example 5

Cells from Lots C were discharged on the same test used in Example 3. The results are summarized in the table below.

The addition of 3Me2Ox resulted in more than a fourfold increase in capacity at 0°C compared to Lot B, with only a small reduction in capacity at room temperature (still 8 percent better than Lot A).

### Example 6

Comparative FR6 cells were made in the same manner as those in Lot A except for the electrolyte solvent composition, which was the same as that used for the cells in Lot C (with 3Me2Ox added). These cells are designated Lot D in the table below.

### Example 7

Cells from Lots D were discharged on the same test used in Example 3. The results are summarized in the table below.

The addition of 3Me2Ox to the electrolyte used for Lot A resulted in essentially no increase in capacity at room temperature compared to Lot A but a significant reduction in capacity at both 0°C and -20°C, compared to both Lot A and Lot C.

**Table**

| Lot | Solute | Solvent | Discharge Capacity (% of Lot A @ Room Temp.) | | |
|---|---|---|---|---|---|
| | Moles/Liter and Type | 3Me2OX included | Room Temp. | 0°C | -20°C |
| A | 1.0 LiCF₃SO₃ | no | 100 | 86 | 25 |
| B | 0.75 LiI | no | 112 | 8 | < 1 |
| C | 0.75 LiI | yes | 108 | 36 | 1 |
| D | 1.0 LiCF₃SO₃ | yes | 100 | 23 | 13 |

The above examples illustrate advantages of the present invention. With the addition of a relatively small amount of 3Me2Ox to an electrolyte solvent containing a high level of DME, LiI can be used as a replacement for LiCF₃SO₃, reducing the cost of the electrolyte and increasing high rate discharge capacity at room temperature, while substantially reducing the undesirable effects on capacity at low temperatures. When LiCF₃S0₃ is used as the solute, the same change in electrolyte solvent does not provide an increase in the high rate discharge capacity at room temperature but reduces the capacity at low temperatures.

## Claims

1. A primary electrochemical battery cell having a negative electrode comprising an alkali metal, a positive electrode, a separator disposed between the negative and positive electrodes, and an electrolyte, wherein the electrolyte comprises:
a solute comprising greater than 50 weight percent lithium iodide; and
a solvent comprising 45 to 80 volume percent 1,2-dimethoxyethane and 5 to 25 volume percent 3-methyl-2-oxazolidinone.

2. The cell defined in claim 1, wherein the solvent further comprises at least one additional cosolvent

3. The cell defined in claim 2, wherein the solvent further comprises a 1,3-dioxolane basedcosolvent selected from 1,3-dioxolane and substituted 1,3-dioxolane.

4. The cell defined in claim 3, wherein the solvent comprises up to 45 volume percent of the 1,3-dioxolane based cosolvents

5. The cell defined in claim 3, wherein the volume ratio of 1,2-dimethoxyethane to the 1,3-dioxolane based cosolvent is at least 1 to 1.

6. The cell defined in claim 5, wherein the volume ratio of 1,2-dimethoxyethane to the 1,3-dioxolane based cosolvent is at least 2 to 1.

7. The cell defined in claim 6, wherein the volume ratio of 1,2-dimethoxyethane to the 1,3-dioxolane based cosolvent is 3 to 1.

8. The cell defined in claim 2, wherein the solvent further comprises 3,5-dimethylisoxazole.

9. The cell defined in claim 1, wherein the solvent comprises a total of less than 5 weight percent of dialkyl carbonates and cyclic carbonates.

10. The cell defined in claim 9, wherein the solvent is free of dialkyl carbonates and cyclic carbanates.

11. The cell defined in claim 1, wherein the electrolyte comprises 0.5 to 2 moles of solute per liter of solvent.

12. The cell defined in claim 1, wherein the solute further comprises lithium trifluoromethane sulfonate.

13. The cell defined in claim 1, wherein the solute consists essentially of lithium iodide.

14. The cell defined in claim 1, wherein the alkali metal is at least one metal selected from the group consisting of lithium, sodium and potassium.

15. The cell defined in claim 14, wherein the alkali metal comprises a lithium metal.

16. The cell defined in claim 15, wherein the lithium metal comprises an alloy.

17. The cell defined in claim 16, wherein the alloy comprises aluminum.

18. The cell defined in claim 1, wherein the positive electrode comprises at least one member selected from the group consisting of FeS and FeS₂.

19. The cell defined in claim 18, wherein the positive electrode comprises a mixture of FeS₂ and carbon.

20. The cell defined in claim 1, wherein the positive electrode comprises a coating of a mixture on a metal current collector, and the mixture comprises a binder.

21. The electrochemical battery cell of claim 1
wherein:
the cell is a primary cell;
the negative electrode comprises a lithium metal;
the positive electrode comprises at least one of FeS and FeS₂;
the electrolyte comprises a solute comprising greater than 50 weight percent lithium iodide and a solvent comprising from more than 50 to 80 volume percent 1,2-dimethoxyethane and 5 to 20 volume percent 3-memyl-2-oxazolidinone; and
the concentration, of solute is 0.5 to 2 moles per liter of solvent

22. An electrolyte used in a primary lithium battery cell, wherein:
the electrolyte comprises 0.5 to 2 moles of solute per liter of a solvent;
the solute comprises greater than 50 weight percent lithium iodide; and
the solvent comprises 45 to 80 volume percent 1,2-dimethoxyethane and 5 to 25 volume percent 3-methyl-2-oxazolidinone.

23. The electrolyte defined in claim 22, wherein the solvent further comprises at least one additional solvent

24. The electrolyte defined in claim 23, wherein the solvent further comprises 1,3 - dioxolane.

25. The electrolyte defined in claim 24, wherein the solvent comprises up to 45 volume percent 1,3-dioxolane.

26. The electrolyte defined in claim 24, wherein the volume ratio of 1,2-dimetboxyetbane to 1,3-dioxolane is at least 1 to 1.

27. The electrolyte defined in claim 26, wherein the volume ratio of 1,2-dimethoxyethane to 1,3-dioxolane is at least 2 to 1.

28. The electrolyte defined in claim 27, wherein the volume ratio of 1,2-dimethoxyethane to 1,3-dioxolane is 3 to 1.

29. The electrolyte defined in claim 22, wherein the solvent further comprises 3,5-dimethylisoxazole.

30. The electrolyte defined in claim 22, wherein the solvent comprises a total of less than 5 weight percent of dialkyl carbonates and cyclic carbonates.

## Patentansprüche

1. Elektrochemische Primärbatteriezelle mit einer negativen Elektrode, die ein Alkalimetall umfasst, einer positiven Elektrode, einem Separator, der sich zwischen der negativen und der positiven Elektrode befindet, und einem Elektrolyten, wobei der Elektrolyt Folgendes umfasst:
einen gelösten Stoff, der mehr als 50 Gew.-% Lithiumiodid umfasst; und
ein Lösungsmittel, das 45 bis 80 Volumenprozent 1,2-Dimethoxyethan und 5 bis 25 Volumenprozent 3-Methyl-2-oxazolidinon umfasst.

2. Zelle gemäß Anspruch 1, wobei das Lösungsmittel weiterhin wenigstens ein zusätzliches Cosolvens umfasst.

3. Zelle gemäß Anspruch 2, wobei das Lösungsmittel weiterhin ein auf 1,3-Dioxolan basierendes Cosolvens umfasst, das aus 1,3-Dioxolan und substituiertem 1,3-Dioxolan ausgewählt ist.

4. Zelle gemäß Anspruch 3, wobei das Lösungsmittel bis zu 45 Volumenprozent des auf 1,3-Dioxolan basierenden Cosolvens umfasst.

5. Zelle gemäß Anspruch 3, wobei das Volumenverhältnis von 1,2-Dimethoxyethan zu dem auf 1,3-Dioxolan basierenden Cosolvens wenigstens 1 zu 1 beträgt.

6. Zelle gemäß Anspruch 5, wobei das Volumenverhältnis von 1,2-Dimethoxyethan zu dem auf 1,3-Dioxolan basierenden Cosolvens wenigstens 2 zu 1 beträgt.

7. Zelle gemäß Anspruch 6, wobei das Volumenverhältnis von 1,2-Dimethoxyethan zu dem auf 1,3-Dioxolan basierenden Cosolvens 3 zu 1 beträgt.

8. Zelle gemäß Anspruch 2, wobei das Lösungsmittel weiterhin 3,5-Dimethylisoxazol umfasst.

9. Zelle gemäß Anspruch 1, wobei das Lösungsmittel insgesamt weniger als 5 Gew.-% Dialkylcarbonate und cyclische Carbonate umfasst.

10. Zelle gemäß Anspruch 9, wobei das Lösungsmittel frei von Dialkylcarbonaten und cyclischen Carbonaten ist.

11. Zelle gemäß Anspruch 1, wobei der Elektrolyt 0,5 bis 2 mol gelösten Stoff pro Liter Lösungsmittel umfasst.

12. Zelle gemäß Anspruch 1, wobei der gelöste Stoff weiterhin Lithiumtrifluormethansulfonat umfasst.

13. Zelle gemäß Anspruch 1, wobei der gelöste Stoff im Wesentlichen aus Lithiumiodid besteht.

14. Zelle gemäß Anspruch 1, wobei das Alkalimetall wenigstens ein Metall ist, das aus der Gruppe ausgewählt ist, die aus Lithium, Natrium und Kalium besteht.

15. Zelle gemäß Anspruch 14, wobei das Alkalimetall ein Lithiummetall umfasst.

16. Zelle gemäß Anspruch 15, wobei das Lithiummetall eine Legierung umfasst.

17. Zelle gemäß Anspruch 16, wobei die Legierung Aluminium umfasst.

18. Zelle gemäß Anspruch 1, wobei die positive Elektrode wenigstens einen Vertreter umfasst, der aus der Gruppe ausgewählt ist, die aus FeS und FeS₂ besteht.

19. Zelle gemäß Anspruch 18, wobei die positive Elektrode ein Gemisch aus FeS₂ und Kohlenstoff umfasst.

20. Zelle gemäß Anspruch 1, wobei die positive Elektrode eine Beschichtung aus einem Gemisch auf einem Metall-Stromabnehmer umfasst und das Gemisch ein Bindemittel umfasst.

21. Elektrochemische Batteriezelle gemäß Anspruch 1, wobei:
die Zelle eine Primärzelle ist;
die negative Elektrode ein Lithiummetall umfasst;
die positive Elektrode wenigstens eines der Sulfide FeS und FeS₂ umfasst;
der Elektrolyt einen gelösten Stoff, der mehr als 50 Gew.-% Lithiumiodid umfasst, und ein Lösungsmittel, das mehr als 50 bis 80 Volumenprozent 1,2-Dimethoxyethan und 5 bis 20 Volumenprozent 3-Methyl-2-oxazolidi-non umfasst, umfasst;
die Konzentration des gelösten Stoffs 0,5 bis 2 mol pro Liter Lösungsmittel beträgt.

22. Elektrolyt, der in einer primären Lithiumbatteriezelle verwendet wird, wobei:
der Elektrolyt 0,5 bis 2 mol gelösten Stoff pro Liter eines Lösungsmittels umfasst;
der gelöste Stoff mehr als 50 Gew.-% Lithiumiodid umfasst; und
das Lösungsmittel 45 bis 80 Volumenprozent 1,2-Dimethoxyethan und 5 bis 25 Volumenprozent 3-Methyl-2-oxazolidinon umfasst.

23. Elektrolyt gemäß Anspruch 22, wobei das Lösungsmittel weiterhin wenigstens ein zusätzliches Lösungsmittel umfasst.

24. Elektrolyt gemäß Anspruch 23, wobei das Lösungsmittel weiterhin 1,3-Dioxolan umfasst.

25. Elektrolyt gemäß Anspruch 24, wobei das Lösungsmittel bis zu 45 Volumenprozent 1,3-Dioxolan umfasst.

26. Elektrolyt gemäß Anspruch 24, wobei das Volumenverhältnis von 1,2-Dimethoxyethan zu 1,3-Dioxolan wenigstens 1 zu 1 beträgt.

27. Elektrolyt gemäß Anspruch 26, wobei das Volumenverhältnis von 1,2-Dimethoxyethan zu 1,3-Dioxolan wenigstens 2 zu 1 beträgt.

28. Elektrolyt gemäß Anspruch 27, wobei das Volumenverhältnis von 1,2-Dimethoxyethan zu 1,3-Dioxolan 3 zu 1 beträgt.

29. Elektrolyt gemäß Anspruch 22, wobei das Lösungsmittel weiterhin 3,5-Dimethylisoxazol umfasst.

30. Elektrolyt gemäß Anspruch 22, wobei das Lösungsmittel insgesamt weniger als 5 Gew.-% Dialkylcarbonate und cyclische Carbonate umfasst.

## Revendications

1. Elément de batterie électrochimique primaire comportant une électrode négative comprenant un métal alcalin, une électrode positive, un séparateur disposé entre les électrodes négative et positive et un électrolyte, dans lequel l'électrolyte comprend :
un soluté comprenant plus de 50 % en poids d'iodure de lithium, et
un solvant comprenant 45 à 80 % en volume de 1,2-diméthoxyéthane et 5 à 25 % en volume de 3-méthyl-2-oxazolidinone.

2. Elément suivant la revendication 1, dans lequel le solvant comprend de plus au moins un cosolvant additionnel.

3. Elément suivant la revendication 2, dans lequel le solvant comprend de plus un cosolvant à base de 1,3-dioxolane choisi parmi le 1,3-dioxolane et les 1,3-dioxolanes substitués.

4. Elément suivant la revendication 3, dans lequel le solvant comprend jusqu'à 45 % en volume du cosolvant à base de 1,3-dioxolane.

5. Elément suivant la revendication 3, dans lequel le rapport en volume de 1,2-diméthoxyéthane au cosolvant à base de 1,3-dioxolane est d'au moins 1 à 1.

6. Elément suivant la revendication 1, dans lequel le rapport en volume de 1,2-diméthoxyéthane au cosolvant à base de 1,3-dioxolane est d'au moins 2 à 1.

7. Elément suivant la revendication 6, dans lequel le rapport en volume de 1,2-diméthoxyéthane au co-solvant à base de 1,3-dioxolane est de 3 à 1.

8. Elément suivant la revendication 2, dans lequel le solvant comprend de plus de 3,5-diméthylisoxazole.

9. Elément suivant la revendication 1, dans lequel le solvant comprend un total de moins de 5 % en poids de carbonates de dialkyle et de carbonates cycliques.

10. Elément suivant la revendication 9, dans lequel le solvant est exempt de carbonates de dialkyle et de carbonates cycliques.

11. Elément suivant la revendication 1, dans lequel l'électrolyte comprend 0,5 à 2 moles de soluté par litre de solvant.

12. Elément suivant la revendication 1, dans lequel le soluté comprend de plus du trifluorométhane sulfonate de lithium.

13. Elément suivant la revendication 1, dans lequel le soluté se compose essentiellement d'iodure de lithium.

14. Elément suivant la revendication 1, dans lequel le métal alcalin est au moins un métal choisi dans le groupe comprenant le lithium, le sodium et le potassium.

15. Elément suivant la revendication 14, dans lequel le métal alcalin comprend un métal à base de lithium.

16. Elément suivant la revendication 15, dans lequel le métal à base de lithium comprend un alliage.

17. Elément suivant la revendication 16, dans lequel l'alliage comprend de l'aluminium.

18. Elément suivant la revendication 1, dans lequel l'électrode positive comprend au moins un membre choisi dans le groupe comprenant FeS et FeS₂.

19. Elément suivant la revendication 18, dans lequel l'électrode positive comprend un mélange de FeS₂ et de carbone.

20. Elément suivant la revendication 1, dans lequel l'électrode positive comprend un revêtement d'un mélange sur un collecteur de courant métallique, et le mélange comprend un liant.

21. Elément de batterie électrochimique suivant la revendication 1,
dans lequel :
l'élément est un élément primaire ;
l'électrode négative comprend un métal à base de lithium ;
l'électrode positive comprend au moins un composé parmi FeS et FeS₂; 1
l'électrolyte comprend un soluté comprenant plus de 50 % en poids d'iodure de lithium et un solvant comprenant de plus de 50 à 80 % en volume de 1,2-diméthoxyéthane et de 5 à 20 % en volume de 3-méthyl-2-oxazolidinone ; et
la concentration de soluté est de 0,5 à 2 moles par litre de solvant.

22. Electrolyte utilisé dans un élément de batterie au lithium primaire, dans lequel :
l'électrolyte comprend de 0,5 à 2 moles de soluté par litre de solvant ;
le soluté comprend plus de 50 % en poids d'iodure de lithium ; et
le solvant comprend de 45 à 80 % en volume de 1,2-diméthoxyéthane et 5 à 25 % en volume de 3-méthyl-2-oxazolidinone.

23. Electrolyte suivant la revendication 22, dans lequel le solvant comprend de plus au moins un solvant additionnel.

24. Electrolyte suivant la revendication 23, dans lequel le solvant comprend de plus du 1,3-dioxolane.

25. Electrolyte suivant la revendication 24, dans lequel le solvant comprend jusqu'à 45 % en volume de 1,3-dioxolane.

26. Electrolyte suivant la revendication 24, dans lequel le rapport en volume de 1,2-diméthoxyéthane au 1,3-dioxolane est d'au moins 1 à 1.

27. Electrolyte suivant la revendication 26, dans lequel le rapport en volume de 1,2-diméthoxyéthane au 1,3-dioxolane est d'au moins 2 à 1.

28. Electrolyte suivant la revendication 27, dans lequel le rapport en volume de 1,2-diméthoxyéthane au 1,3-dioxolane est d'au moins 3 à 1.

29. Electrolyte suivant la revendication 22, dans lequel le solvant comprend de plus du 3,5-diméthylisoxazole.

30. Electrolyte suivant la revendication 22, dans lequel le solvant comprend un total de moins de 5 % en poids de carbonates de dialkyle et de carbonates cycliques.
